# EUROPEAN PATENT APPLICATION

(11) **EP 3 431 819 A1**
(43) Date of publication of application: **23.01.2019**
(21) Application number: 18183494.6
(22) Date of filing: 13.07.2018
(51) Int. Cl.: F16H 57/032, F16H 57/02, C25D 11/04

(54) **REDUCTION GEAR UNIT**

(30) Priority: 17.07.2017 IT 201700080501
(71) Applicant: Tramec S.R.L., 40012 Calderara di Reno (Bologna) (IT)
(72) Inventor: GIROTTI, Leo, 40013 Castel Maggiore (Bologna) (IT); DOMENICHINI, Stefano, 40127 Bologna (IT)
(74) Representative: Puggioli, Tommaso

(57) **Abstract**

Described is a reduction gear unit (1) comprising an outer structure (2) formed by at least one component (5), for example a casing, comprising a first base layer, made of aluminium or an aluminium alloy; the component (5) comprises a second layer, developed on the first base layer, having a plurality of pores and transformed on the surface with a sealing of the pores by means of silver or silver ions.

## Description

The invention relates to a reduction gear unit and in particular a gear reducer with at least the casing made of aluminium or an aluminium alloy.

The reduction gear units comprise, very briefly, an outer load-bearing structure, generally obtained by casting, comprising a casing and a flange, coupled with the casing, for the joining, in general, of the reduction gear unit to a corresponding motor.

Very briefly, the inside of the outer structure houses and supports a drive shaft, generally designed for coupling with the motor, and an outlet driven shaft. A plurality of gears, also housed and supported inside the outer structure of the reduction gear unit, couple the drive shaft with the driven shaft duct and define the transmission ratio of the reduction gear unit.

The inner shape of the casing is also determined by the need to provide seats for the shafts or the gears or bearings for supporting the moving parts.

Also externally, the shape of the casing is affected by, amongst other things, the presence of the above-mentioned seats for internal use.

Moreover, again externally, there are necessarily flanges and/or bases and/or holes for the assembly of the reduction gear unit in the workplace.

The outer shape of the casing is therefore rather complex, with recesses and/or undercuts which can become receptacles for dirt or impurities which are difficult to remove. These impurities might also activate, especially if of a food type, the development of bacteria which are particularly unwelcome in food processing areas.

To overcome these problems, casings (and the corresponding flanges) have been developed whose outer surfaces are substantially smooth, that is to say, without recesses or undercuts, to avoid the depositing of dirt and impurities on the outer surface.

A smooth outer surface is also much easier to wash and clean relative to the traditional surfaces.

The main drawback of these solutions is that they require a dedicated design not dictated exclusively by technical features and which therefore require dedicated times and resources.

In this context, the main aim of this invention is to overcome the above-mentioned drawbacks.

The aim of this invention is to provide a reduction gear unit in which avoids the bacterial proliferation regardless of the shape of the reduction gear unit.

The technical purpose indicated and at least the aim specified are substantially achieved by a reduction gear unit which has the features described in independent claim 1.

According to an aspect of this invention, the invention relates to a reduction gear unit comprising an outer structure formed by at least a first component, for example a casing and/or a flange.

Basically, the invention relates to a reduction gear unit comprising an outer structure formed by a casing and at least a first component, for example a flange.

For simplicity, reference is made generically to the casing meaning that all the components of the outer structure of the reduction gar unit may be of the same type.

According to an aspect of the invention, the first component of the outer structure of the reduction gear unit has a first base layer, for example obtained by moulding or casting, made of aluminium or an aluminium alloy.

The first component has a second anodised layer developed on the first base layer.

According an aspect of the invention, the second layer has a plurality of superficial pores.

The pores generally have a diameter of between 10nm and 400nm and a length of between 20nm and 400nm.

According to an aspect of the invention, the second layer or anodised layer is transformed on the surface with a sealing of the pores by means of particles of silver or silver ions.

Advantageously, this sealing with silver gives the outer structure of the reduction gear unit an anti-bacterial and bacteriostatic capacity, so the outer surface of the casing and/or of the flange may have any shape and have recesses and/or undercuts as a function of the mechanical purposes to be performed.

According to one aspect of this invention, the first component, in particular the first layer of the first component, is made of an aluminium alloy comprising silicon.

According to an aspect of the invention, the first layer of the first component is, in practice, made with an aluminium alloy comprising silicon in a quantity of between 0% and 20% by weight.

Preferably, the aluminium alloy comprises silicon in a quantity equal to 12% by weight, for example in the casing and/or in the flange. In this way, the first component can be obtained by moulding or casting, may undergo subsequent mechanical processing and the silver may be effectively "fixed" on the second anodising layer.

According to an alternative embodiment, there may be 1% or 7% or 9% of silicon.

According to an aspect of the invention, the second layer has a microporous structure with regular matrix, having honeycomb cells comprising the pores.

Preferably, the second layer including the silver may be obtained by means of a surface treatment process comprising an anodic oxidation step.

According to an aspect of the invention, the process comprises
a step of immersion of the first component comprising only the first layer, as obtained from a previous moulding or casting step, in an electrolyte. The first component, before being immersed in the electrolyte, may also be subjected to other mechanical processing operations for finishing or deburring.

The first component consists, basically, of only first layer, whether it is made of aluminium or aluminium alloy comprising silicon, when it is inserted in the electrolyte.

According to an aspect of the invention, the electrolyte consists mainly of sulphuric acid bath or an oxalic acid bath or a mixture of them with the addition of silver nitrate or silver sulphate.

The surface treatment process comprises a step of supplying the first layer with a combination of continuous and alternating current, in such a way that the second layer develops on the first layer and the silver, separated from the silver nitrate or silver sulphate, joins with the second layer.

Other features and advantages of the invention are more apparent in the detailed description below, with reference to a non-limiting and non-exclusive preferred embodiment of reduction gear unit, as illustrated in the accompanying drawings, in which:
- Figure 1A illustrates a schematic perspective view of an outer structure of a reduction gear unit according to the invention;
- Figure 1B illustrates a schematic perspective view of an outer structure of a reduction gear unit according to the invention;
- Figure 2 illustrates a detail of the structure of the reduction gear unit of Figure 1 in a greatly enlarged scale;
- Figure 3 illustrates a diagram, partly in blocks, of a system for obtaining an outer structure of the reduction gear unit according to the invention.

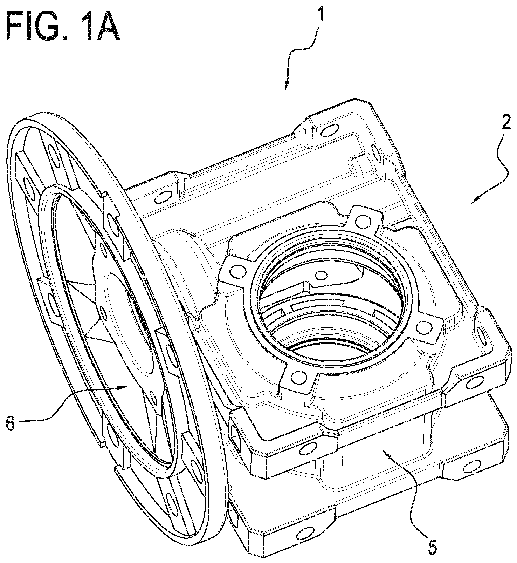

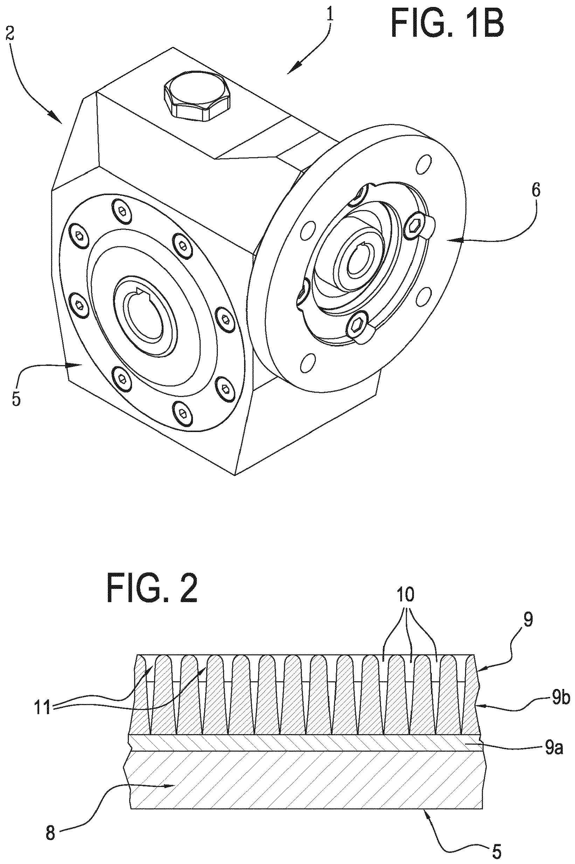

With particular reference to Figures 1A, 1B, the numeral 1 denotes a reduction gear unit in accordance with the invention.

The reduction gear unit 1 is described and illustrated only insofar as necessary for understanding this invention.

Schematically, the reduction gear unit 1 comprises a outer structure 2 inside of which are housed, not illustrated, a drive shaft, a driven shaft and a set of gears for coupling the driven shaft with the drive shaft.

The shafts and the gears are connected to the structure 2 in a substantially known manner.

The outer structure 2 comprises, in the example illustrated, a first component 5, also referred to as 'casing'.

The outer structure 2, supports at a relative end, a flange 6 for coupling to an electric motor not illustrated.

The above-mentioned drive shaft faces the outside of the casing 5 at the flange 6 in a substantially known manner.

In the following description, for simplicity of description, reference is made only to the first component 5, as all the components of the outer structure 2, for example the casing and the flange, can be made in the same way.

Similarly, reference will also be made below to a single component meaning that several components can also be obtained with the process described below.

With particular reference to Figure 2, it should be noted that the component 5 has a first base layer 8.

The first layer 8 may be formed, for example, by moulding, casting or by mechanical processes from the solid piece and is made of aluminium or an aluminium alloy.

Generally speaking, an aluminium alloy comprises, in addition to aluminium, other alloy elements and impurities which are inevitably present.

Similarly, also in the case of aluminium, impurities are inevitably present. The aluminium alloy may comprise silicon in a quantity of between 0% and 20% by weight.

According to a preferred embodiment, the alloy of the component 5 and/or of the component 6 comprises silicon in a quantity equal to 12% by weight. In one embodiment, for example, the casing 5 is made, preferably from the solid piece with mechanical processing operations, of aluminium without silicon (Si = 0%) whilst the flange is made of aluminium alloy comprising silicon in a quantity equal to the nominal value of 12% (corresponding to percentages of silicon of between 10% and the 13.5%) in weight.

In one embodiment, the first component 5 and/or the second component 6 are made, preferably from the solid piece with mechanical processing operations, of aluminium comprising silicon with a nominal value of 1% (corresponding to percentages of silicon of between 0.30% and the 1.4%).

In one embodiment the first component 5 and/or the second component 6 are made, preferably by casting, of an aluminium alloy comprising silicon with a nominal of 7% (corresponding to percentages of silicon of between 6.5% and the 7.5%).

In one embodiment the first component 5 and/or the second component 6 are made, preferably by casting, of an aluminium alloy comprising silicon with a nominal of 9% (corresponding to percentages of silicon of between 8.3% and the 9.7%).

The component 5 and the component 6 have a second anodised layer 9 developed on the first base layer 8.

Basically, a component 5 or 6 consisting of the only the first layer 8 defines a semi-finished product from which is obtained the finished component 5, 6 once the anodised layer 9 is provided.

The second layer 9 may have a thickness of from 1 to 100µm; the layer 9 is, in effect, not removable since formed directly on the surface of the component 5 generating an oxidised layer which may spread by approximately 50% inside the layer 8 and increase by another 50% on the surface of it.

As illustrated, the layer 9 has, on its outer surface, a plurality of pores 10. The pores 10 preferably have a diameter of between 10nm and 400nm and a length of between 20nm and 400nm.

In a preferred embodiment, in particular if aluminium alloys with a low silicon content are used, for example a nominal value of between 0% and the 2%, the component 5 and/or 6 is made from the solid piece starting, for example, from a bar made of aluminium.

The Applicant has observed that in this case the layer 9 has a thickness of approximately 50µm which gives the component a high resistance to corrosion.

Preferably, the structure 2 is made in a single body from a block of aluminium in successive milling, drilling and tumbling steps.

The latter step is predetermined in terms of
- specific processing time;
- type and size of cones used for the processing;
- size of the processing tank;
- maximum batch processed inside the processing tank, in such a way as to obtain a semi-finished product having ideal conditions for a subsequent anodising.

More specifically, the tumbling determines the rounding of any sharp edges created following the previous machining operations.

It should be noted that the machining processes on the aluminium determine a desired adhesion, and penetration, at a molecular level, with the aluminium of the layer 9.

Looking in more detail at the second layer 9, it should be noted that preferably the same has a microporous structure with regular matrix, having honeycomb cells comprising the pores 10.

The layer 9 is transformed on the surface with a sealing of the pores 10 by means of silver generically indicated in Figure 2 with the numeral 11.

According to this invention, the layer 9 including the silver 11 is preferably obtained by means of a surface treatment process of the type described, for example, in patent document EP1207220A1 which is incorporated herein by reference for completeness of description.

The process for obtaining the second layer and therefore the component 5 and/or the component 6 comprises a step of immersion of the component 5 and/or the component 6, comprising only the layer 8, that is formed only by the layer 8, in an electrolyte.

The electrolyte may be a sulphuric acid bath or an oxalic acid bath or a chromic acid bath or a mixture of them with the addition of silver nitrate or silver sulphate.

The bath of sulphuric acid may contain, for example, from 150 to 300 grams / litre of sulphuric acid. The oxalic acid bath may contain, for example, from 20 to 40 grams / litre of oxalic acid. A dose of silver nitrate to be added to the bath can be from 2 to 10 grams / litre. A dose of silver sulphate to be added to the bath can be from 2 to 10 grams / litre.

The component 5 is connected as an anode to a power supply circuit and the process comprises a step of supplying the first layer with a combination of continuous and alternating current, in such a way that the layer 9 develops on the layer 8 and the silver, in the form of particles or ions, separated from the silver nitrate or silver sulphate, joins with the second layer 9.

The supply current may also be a *Periodic current reversal* (PCR).

Although the drawings illustrate schematically, for simplicity and clarity, the entire structure 2 of the reduction gear unit 1, the process occurs, preferably, on all the individual components of the structure 2 before it and the reduction gear unit 1 are assembled.

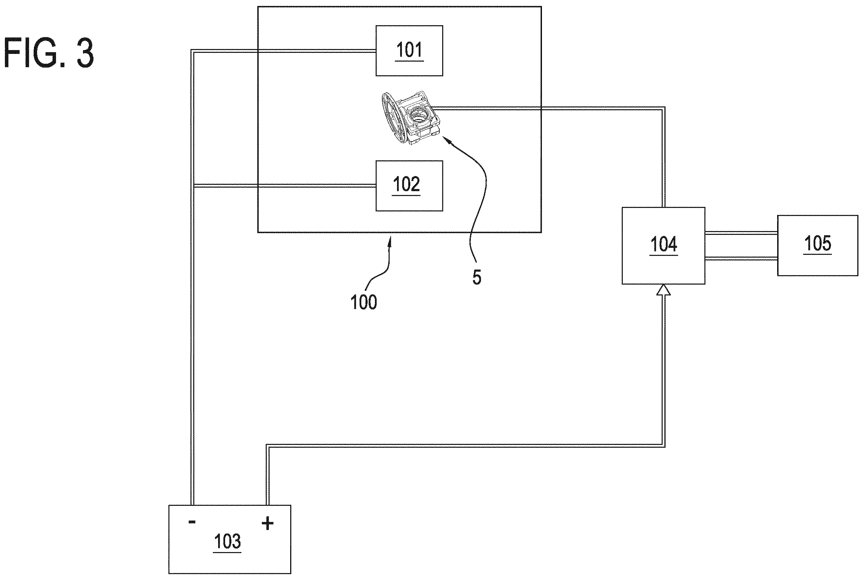

For example, in particular with reference to Figure 3, the component 5 is inserted in a tank 100 filled with the above-mentioned electrolyte.

Inside the tank 100, in particular on opposite sides of it, there are electrodes, schematically illustrated with respective blocks 101 and 102, connected in parallel to each other.

The electrodes 101 and 102 can be made, for example, of carbon-rich material and formed by separate plates connected in series, not illustrated. The electrodes 101 and 102 are connected to the negative pole of a direct current source DC schematically represented as a block 103.

To perform the electrolytic process for the surface treatment of the component 5 (or of the component 6), the component 5 is charged with a current having a combined AC / DC wave form or similar.

The positive pole of the DC source 103 is electrically connected to a reactor schematically represented as a block 104 whilst the negative pole is electrically connected, as mentioned above, to the two electrodes 101, 102.

The reactor 104 is also electrically connected to a source of alternating current AC 105. The reactor 104 combines the positive direct current from the source DC 103 with the alternating current from the source AC 105 for producing a combined current which is supplied to the component 5.

The current for the surface treatment of the component 5 is, for example, set at a level such that its density ranges from 1 to 10 A/dm².

The current, at a desired level of density in the above-mentioned interval of values, is fed continuously for a predetermined period of time.

The electrolyte, during the surface treatment, is preferably kept at a temperature of between -10° and 25° Centigrade.

At the end of the oxidation, when the layer 9 has been completed, particles of silver, in particular silver ions, have been separated from the nitrate or from the sulphate of silver and deposited in the pores 10.

As illustrated in Figure 2, the structure of the oxide layer 9 comprises two parts: an inner barrier layer 9a, adhering to the layer 8, and an outer porous layer 9b, comprising the pores 10.

According to the prior art, the barrier layer 9a consists almost completely of the amorphous crystalline form of the aluminium oxide and it forms in the first moments of the anodising process, increasing linearly with the set voltage.

The number and size of the pores 10 depend, schematically, on the electrolyte adopted and the voltage applied.

In an alternative embodiment, the surface treatment process of the component 5, or in general of the components of the outer structure 2 of the reduction gear unit 1, comprises a conditioning step, during an anodising cycle, which is interposed between the actual anodising and a fixing step.

The conditioning step comprises immersing the component 5 (and/or the component 6) in a tank with and aqueous acid solution containing available silver ions; a potential difference is then applied for approximately one minute with the component 5 connected in such a way as to be a cathode. The potential difference activates a migration of the ions from the solution to the surface of the component 5 where they will adhere in the pores 10.

The surface treatment of the casing and of the flange releases the making of them from substantially smooth forms since the silver present acts, if there are impurities, as a sanitising agent.

## Claims

1. A reduction gear unit comprising an outer structure (2) comprising at least a component (5, 6), for example a casing (5) and/or a cover (6), comprising
a first base layer (8), made of aluminium or an aluminium alloy,
a second layer (9) developed on the first base layer (8), the second layer (9) having a plurality of pores (10) and being transformed on the surface with a sealing of the pores (10) with silver and/or silver ions.

2. The reduction gear unit according to claim 1, wherein the aluminium alloy comprises silicon in a quantity of between 0% and 20%, preferably 1% nominal or 7% nominal or 9% nominal or 12% nominal.

3. The reduction gear unit according to claim 1 or 2, wherein the second layer (9) has a microporous structure with regular matrix, having honeycomb cells comprising the pores (10).

4. The reduction gear unit according to any one of the preceding claims, wherein the second layer (9) including silver and/or silver ions is obtained by a of surface treatment process comprising a step of anodic oxidation.

5. The reduction gear unit according to claim 4 wherein the surface treatment process comprises
a step of immersion of the component (5, 6) comprising only the first base layer (8) in an electrolyte which consists mainly of a sulphuric acid bath or an oxalic acid bath or a mixture of them with the addition of silver nitrate or silver sulphate for an electrolytic process,
a step of supplying the first base layer (8) with a combination of continuous and alternating current, in such a way that the second layer (9) develops on the first basic layer (8) and the silver ions, separate from the silver nitrate or silver sulphate, join with the second layer (9).

6. The reduction gear unit according to claim 4 or 5, wherein the surface treatment process comprises a step of immersion of the component (5, 6) in an aqueous acid solution containing silver ions.

7. The reduction gear unit according to any one of the preceding claims, wherein the first base layer (8) of the component (5, 6) is made from a solid piece by means of machining processes.
